# EUROPÄISCHE PATENTANMELDUNG

(11) **EP 2 221 687 A1**
(43) Veröffentlichungstag der Anmeldung: **25.08.2010**
(21) Anmeldenummer: 09002593.3
(22) Anmeldetag: 24.02.2009
(51) Int. Cl.: G05B 19/05, G05B 19/418

(54) **Verfahren zur Steuerung eines Rezeptes eines Chargenprozesses**

(71) Anmelder: Siemens Aktiengesellschaft, 80333 München (DE)
(72) Erfinder: Riese, Uwe, 76275 Ettlingen (DE); Roth, Stefan, 76889 Steinfeld (DE)

(57) **Zusammenfassung**

Die Erfindung betrifft ein Verfahren zur Steuerung eines Rezeptes eines Chargenprozesses, wobei mittels eines Batch-Servers (7) eine Rezeptlogik verarbeitet und ein Rezeptsteuerprogramm erzeugt wird, wobei ferner durch einen Schnittstellenbaustein (17) eines Automatisierungsgerätes (4), an welches Aktoren (12) und/oder Sensoren (11) angeschlossen sind, aus dem Rezeptsteuerprogramm Anweisungen und/oder Befehle zum Verarbeiten von Rezeptschritten erzeugt werden, welche zum Ansteuern der Aktoren (12) und/oder zum Einlesen von Sensorsignalen vorgesehen sind. Es werden Maßnahmen vorgeschlagen, welche eine flexible Rezeptgestaltung im Hinblick auf Bedienkomfort und Schrittwechseldauer ermöglichen.

## Beschreibung

Die Erfindung betrifft ein Verfahren zur Steuerung eines Rezeptes eines Chargenprozesses, wobei mittels eines Batch-Servers eine Rezeptlogik verarbeitet und ein Rezeptsteuerprogramm erzeugt wird, wobei ferner durch einen Schnittstellenbaustein eines Automatisierungsgerätes, an welches Aktoren und/oder Sensoren angeschlossen sind, aus dem Rezeptsteuerprogramm Anweisungen und/oder Befehle zum Verarbeiten von Rezeptschritten erzeugt werden, welche zum Ansteuern der Aktoren und/oder zum Einlesen von Sensorsignalen vorgesehen sind. Ferner betrifft die Erfindung eine mit einem Programmiergerät, mit einem Batch-Server und mit einem Automatisierungsgerät versehene Anordnung, welche zur Durchführung des Verfahrens geeignet ist.

Ein derartiges Verfahren sowie eine derartige Anordnung ist aus dem Siemens-Katalog "ST PCS 7 - November 2007", SIMATIC PCS 7, Kapitel 6 bekannt. Im Rahmen einer so genannten Batch-Automatisierung steuern Rezepte Herstellungsprozesse innerhalb industrieller Fertigungen, beispielsweise in Fertigungen der Automobil-, der Pharma- oder Nahrungsmittelindustrie. In Abhängigkeit der eingesetzten Rezeptsteuerung weisen einzelne Fertigungsschritte kurze oder lange Laufzeiten auf, bevor im Rahmen eines so genannten Schrittwechsels von einem Fertigungsschritt in einen nächsten Fertigungsschritt gewechselt wird.

In Fertigungen, für die eine schnelle Abfolge von Fertigungsschritten zwingend ist und für die häufige Schrittwechsel erforderlich sind, z. B. in der milchverarbeitenden Industrie oder im Rahmen der Herstellung von Bier in Brauereien, ist die Zeitdauer für den Wechsel von einem Schritt in den nächsten gering zu halten; denn beispielsweise kommt es gemittelt über einen längeren Zeitraum zu nicht unerheblichen Produktions- bzw. Fertigungsverzögerungen für den Fall eines häufigen Schrittwechsels und für den Fall, dass die Schrittwechseldauer bis zu 12 Sekunden erfordert.
Um die Schrittwechseldauer zu minimieren, ist gewöhnlich vorgesehen, die Rezeptsteuerung (das Rezeptsteuerprogramm) nicht auf dem Batch-Server, sondern ausschließlich auf dem Automatisierungsgerät ablaufen zu lassen. Dadurch werden für das Automatisierungsgerät relevante Daten innerhalb des Automatisierungsgerätes umgesetzt und müssen nicht zunächst einen Bedien- und Beobachtungs-Server durchlaufen.
Nachteilig ist allerdings, dass in diesem Fall die Rezeptlogik, welche auf dem Batch-Server hinterlegt ist, und die Rezeptsteuerung auf unterschiedlichen Geräten betrieben werden, was bedeutet, dass der Bedienkomfort für einen Anwender, z. B. aufgrund des damit verbundenen Verzichts auf ein so genanntes Chargenplanungstool, stark vermindert wird. Darüber hinaus ist ein hoher Speicherbedarf im Automatisierungsgerät erforderlich, was kostenintensiv ist, insbesondere für den Fall, dass dann ein Automatisierungsgerät höherer Leistungsklasse eingesetzt werden muss.

In Fertigungen dagegen, für die eine schnelle Abfolge von Fertigungsschritten nicht zwingend ist und für die nur wenige Schrittwechsel erforderlich bzw. für die langsame Schrittwechsel nicht störend sind, wird sowohl die Rezeptlogik als auch die Rezeptsteuerung auf dem Batch-Server hinterlegt. Von hier aus wird die sequentielle Abarbeitung von Einzeloperationen (Stapeln) gesteuert. Dass sowohl die Rezeptlogik als auch die Rezeptsteuerung auf dem Batch-Server hinterlegt ist, hat den Vorteil, dass der Bedienkomfort für einen Anwender sehr hoch ist; denn in diesem Fall kann z. B. das Chargenplanungstool eingesetzt werden. Ferner ist ein geringer Speicherplatzbedarf im Automatisierungsgerät erforderlich, wodurch kostengünstige Automatisierungsgeräte geringer Leistungsklasse zur Lösung einer Automatisierungsaufgabe vorgesehen werden können.

Der vorliegenden Erfindung liegt die Aufgabe zugrunde, ein Verfahren der eingangs genannten Art zu verbessern. Darüber hinaus ist eine geeignete Anordnung zur Durchführung eines derartigen Verfahrens zu schaffen.

Im Hinblick auf das Verfahren wird diese Aufgabe durch die im kennzeichnenden Teil des Anspruchs 1 und im Hinblick auf die Anordnung durch die im kennzeichnenden Teil des Anspruchs 3 angegebenen Maßnahmen gelöst.

Vorteilhaft ist, dass eine flexible Rezeptgestaltung im Hinblick auf den Bedienkomfort, den Speicherplatzbedarf im Automatisierungsgerät und im Hinblick auf die Schrittwechseldauer ermöglicht wird. Ein Anwender kann wählen zwischen einer Lösung mit hohem Bedienkomfort, verlängerten Schrittwechselzeiten sowie geringerem Speicherplatzbedarf auf dem Automatisierungsgerät und einer Lösung mit extrem schnellen Schrittwechselzeiten (wenige Millisekunden), geringerem Komfort sowie mit hohem Speicherplatzbedarf. Die Auswahl erfolgt z. B. mittels eines Auswahlmenüs bzw. einer Auswahlbox, wobei ermöglicht wird, innerhalb eines Steuerrezeptes Teile im Automatisierungsgerät (schnelle Schrittwechselzeiten) und/oder Teile auf dem Batch-Server (langsame Schrittwechselzeiten) ablaufen zu lassen. Die Projektierung des Rezeptes erfolgt nur einmal, unabhängig davon, ob das Rezept auf dem Batch-Server oder im Automatisierungsgerät ablaufen wird.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

### Es zeigen:

- Figur 1: Bestandteile eines Prozessleitsystems und
- Figur 2: eine schematische Darstellung einer Rezeptverarbeitung.

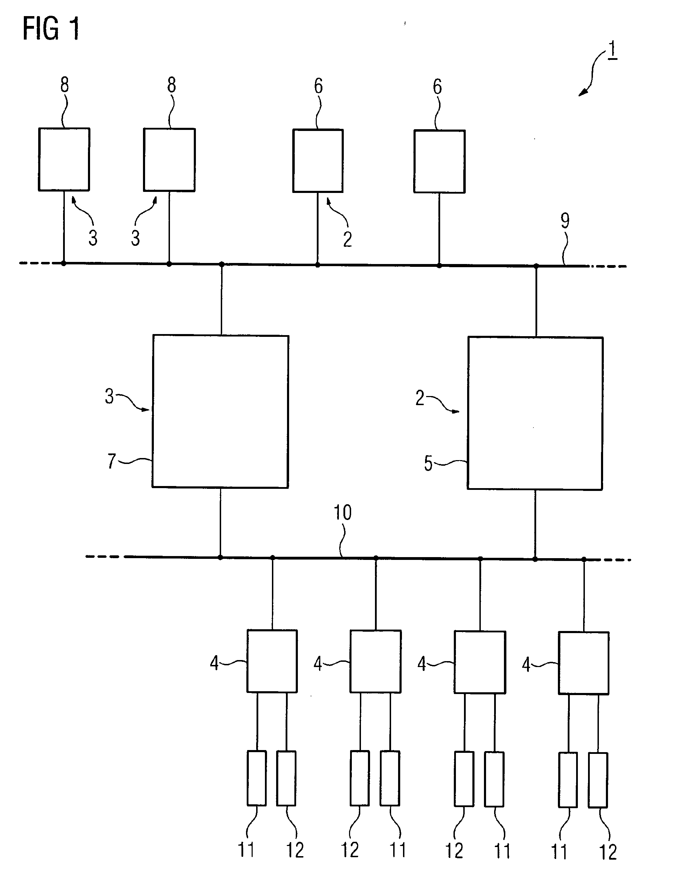

In Figur 1 sind mit 1 Bestandteile eines Prozessleitsystems bezeichnet, das mit einem Operator-System 2, mit einem Batch-System 3 und mit Automatisierungsgeräten 4 versehen ist. Selbstverständlich weist das Prozessleitsystem weitere hier nicht dargestellte Bestandteile bzw. Automatisierungskomponenten auf, z. B. Automatisierungskomponenten in Form von dezentralen Peripheriegeräten und/oder Engineering-Systemen und/oder Maintenance-Stationen. Das Operator-System 2 ist zum Bedienen und Beobachten eines Prozessablaufs in einer Anlage vorgesehen und weist einen OS-Server 5 und mehrere OS-Clients 6 auf, wobei das Operator-System 2 und das Batch-System 3, welches einen Batch-Server 7 und mehrere Batch-Clients 8 umfasst, über geeignete Busverbindungen 9, 10 mit den OS-Clients 6, den Batch-Clients 8 und den Automatisierungsgeräten 4 zum Austausch von Informationen verbunden sind. Eine auf dem Batch-Server 7 oder auf mindestens einem der Automatisierungsgeräte 4, an welche Sensoren 11 und/oder Aktoren 12 angeschlossen sind, ablauffähige Rezeptsteuerung steuert während eines Chargenprozesses mittels Ansteuersignalen die Aktoren 12 an und/oder liest Sensorsignale ein, welche z. B. Temperatur- oder Druckwerte repräsentieren. Dabei sind einerseits geeignete Bedienoberflächen zur Prozessführung auf mindestens einem der OS-Clients 6 und andererseits ein der Rezeptsteuerung zugrunde liegendes Rezept des Chargenprozesses auf mindestens einem der Batch-Clients 8 einem Operator visuell darstellbar.

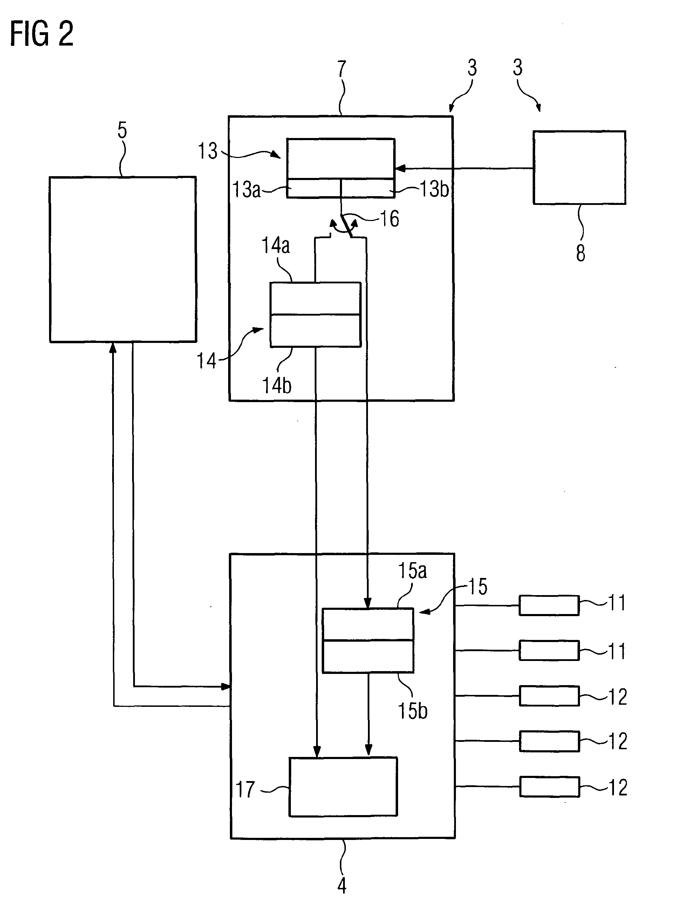

Im Folgenden wird auf Figur 2 verwiesen, in welcher eine schematische Darstellung einer Rezeptverarbeitung dargestellt ist. Die in den Figuren 1 und 2 dargestellten gleichen Teile sind mit gleichen Bezugszeichen versehen.
Ein Anwender erstellt mittels des Batch-Clients 8, welcher gewöhnlich ein Programmiergerät mit entsprechenden Anzeige- und Eingabemitteln umfasst, ein Rezept eines Chargenprozesses, wobei eine Rezeptlogik dieses Rezepts in einer Speicher-und Verarbeitungseinheit 13 des Batch-Servers 7 hinterlegt wird. Aus dieser Rezeptlogik erzeugt der Batch-Server 7 ein Rezeptsteuerprogramm, indem die Verarbeitungseinheit 13 diese Rezeptlogik interpretiert. Im vorliegenden Ausführungsbeispiel erzeugt nach den Vorgaben eines Anwenders die Verarbeitungseinheit 13 Teile 13a des Rezeptsteuerprogramms, welche in einer Interpreter- und Speichereinheit 14 des Batch-Servers 7 hinterlegt, und Teile 13b des Rezeptsteuerprogramms, welche in einer Interpreter- und Speichereinheit 15 des Automatisierungsgerätes 4 abgespeichert werden, was in der Figur durch einen steuerbaren Schalter 16 dargestellt ist. Die Teile 13a, 13b des Rezeptsteuerprogramms unterscheiden sich in ihrer Datenstruktur und können nur von den jeweiligen Geräten verarbeitet bzw. interpretiert werden. Dies bedeutet, dass während der Steuerung des Chargenprozesses - also zur Laufzeit der Steuerung - die in einem Speicher 14a der Interpreter- und Speichereinheit 14 des Batch-Servers 7 hinterlegten Daten nur mittels des Interpreters 14b dieser Einheit 14 und die in einem Speicher 15a der Interpreter- und Speichereinheit 15 hinterlegten Daten nur von einem Interpreter 15b dieser Einheit 15 des Automatisierungsgerätes 4 verarbeitet bzw. interpretiert werden können. Aufgrund der unterschiedlichen Hardware- und Betriebssystemeigenschaften ist es nicht möglich, dass beispielsweise der Interpreter 15b des Automatisierungsgerätes 4 die im Speicher 14a hinterlegten Daten des Batch-Servers 7 interpretieren kann. Ebenso ist der Interpreter 14b des Batch-Servers 7 nicht in der Lage, die in dem Speicher 15a des Automatisierungsgerätes 4 hinterlegten Teile zu interpretieren. Welche Teile des Rezeptsteuerprogramms im Batch-Server 7 oder im Automatisierungsgerät 4 gespeichert werden, entscheidet der Anwender mittels eines auf dem Batch-Client 8 dargestellten Auswahlmenüs. Je nach der zu lösenden Automatisierungsaufgabe ist es möglich, n % (n = 0 bis 100) des Rezeptsteuerprogramms im Automatisierungsgerät und m % (m = 0 bis 100, n+m = 100) des Rezeptsteuerprogramms im Batch-Server 7 zu hinterlegen, wobei - wie beschrieben - während der Steuerung des Chargenprozesses diese Teile dort verarbeitet bzw. interpretiert werden, wo sie hinterlegt wurden. Der Schnittstellenbaustein 17 des Automatisierungsgerätes 4 ist derart ausgebildet, sowohl die vom Interpreter 14b des Batch-Servers 7 übermittelten als auch die vom Interpreter 15b des Automatisierungsgerätes 4 verarbeiteten bzw. interpretierten Daten zu verarbeiten, wobei der Schnittstellenbaustein 17 aus diesen Daten Anweisungen und/oder Befehle zum Verarbeiten von Rezeptschritten erzeugt, welche zum Ansteuern der Aktoren 12 und/oder zum Einlesen von Sensorsignalen vorgesehen sind.

## Patentansprüche

1. Verfahren zur Steuerung eines Rezeptes eines Chargenprozesses, wobei mittels eines Batch-Servers (7) eine Rezeptlogik verarbeitet und ein Rezeptsteuerprogramm erzeugt wird, wobei ferner durch einen Schnittstellenbaustein (17) eines Automatisierungsgerätes (4), an welches Aktoren (12) und/oder Sensoren (11) angeschlossen sind, aus dem Rezeptsteuerprogramm Anweisungen und/oder Befehle zum Verarbeiten von Rezeptschritten erzeugt werden, welche zum Ansteuern der Aktoren (12) und/oder zum Einlesen von Sensorsignalen vorgesehen sind, **dadurch gekennzeichnet, dass** wahlweise das Rezeptsteuerprogramm oder Teile des Rezeptsteuerprogramms im Batch-Server (7) oder im Automatisierungsgerät (4) gespeichert, interpretiert und dem Schnittstellenbaustein (17) zugeführt werden.

2. Verfahren nach Anspruch 1, **dadurch gekennzeichnet, dass** die Auswahl menügesteuert bewirkt wird, wobei einem Anwender ein Auswahlmenü auf einer Anzeigeeinheit dargestellt wird.

3. Anordnung mit einem Programmiergerät (8), welches zur Erstellung einer Rezeptlogik zur Steuerung eines Rezeptes eines Chargenprozesses vorgesehen ist, mit einem Batch-Server (7) zur Verarbeitung der Rezeptlogik und zum Erzeugen eines Rezeptsteuerprogramms und mit einem Automatisierungsgerät (4), an welches Aktoren (12) und/oder Sensoren (11) angeschlossen sind und welches einen Schnittstellenbaustein (17) aufweist, der aus einem aus der Rezeptlogik erzeugten Rezeptsteuerprogramm Anweisungen und/oder Befehle zum Verarbeiten von Rezeptschritten erzeugt, welche zum Ansteuern der Aktoren (12) und/oder zum Einlesen von Sensorsignalen vorgesehen sind, **dadurch gekennzeichnet, dass** aufgrund einer Auswahl eines Anwenders der Batch-Server (7) oder das Automatisierungsgerät (4) das Rezeptsteuerprogramm oder Teile des Rezeptsteuerprogramms abspeichert, interpretiert und dem Schnittstellenbaustein (17) zuführt.

4. Anordnung nach Anspruch 3, **dadurch gekennzeichnet, dass** der Anwender die Auswahl mittels einer Eingabe im Programmiergerät (8) bewirkt, wobei eine Anzeigeeinheit des Programmiergerätes (8) dem Anwender ein Auswahlmenü darstellt.
